# EUROPEAN PATENT APPLICATION

(11) **EP 4 782 801 A1**
(43) Date of publication of application: **29.07.2026**
(21) Application number: 25382049.2
(22) Date of filing: 27.01.2025
(51) Int. Cl.: G01J 3/44, G01J 3/02, G01M 11/00, G01N 21/88, G01J 1/44, G02B 6/00, G01J 3/28

(54) **METHOD AND SYSTEM FOR MEASURING OPTICAL SPECTRA OF SIGNALS BASED ON OPTICAL SPECTROSCOPY**

(71) Applicant: Zepren Solutions, S.L., 50018 Zaragoza (ES)
(72) Inventor: VILLAFRANCA VELASCO, Asier, 50001 Zaragoza (ES); PELLEJER LARRAURI, Enrique, 50012 Zaragoza (ES); HERAS VILA, Carlos, 50002 Zaragoza (ES)
(74) Representative: Elion IP, S.L.

(57) **Abstract**

The disclosure refers to a method and system for measuring optical spectra of signals based on optical spectroscopy. The system comprises a tunable optical source that generates a probe signal, a first optical splitting device that receives a signal under test whose optical spectrum is to be measured, a first optical fiber connected to the first optical splitting device and to the tunable optical source and a first photodetector. The first photodetector is configured to measure, with the signal under test being injected into to the first optical fiber, the insertion losses in the probe signal after having passed through the first optical fiber, subtract a baseline from the measured optical spectrum of the signal under test obtaining a processed optical spectrum and calibrate the processed optical spectrum to obtain the optical spectrum of the signal under test.

## Description

### TECHNICAL FIELD

The present disclosure generally refers to optical spectra measurement technologies based on optical spectroscopy. More specifically, it refers to a method and system for measuring optical spectra of signals, said measurement process involving optical signal interaction through Brillouin scattering effect.

### BACKGROUND

Optical spectroscopy generally refers to the measurement of the spectral composition of optical signals. Light scattering generally refers to those processes where light is forced to deviate from a straight trajectory by localized non-uniformities (including particles and radiation) in the medium through which it pass.

European patent EP1199549A1 describes a device that uses the Brillouin scattering effect in an optical fiber for spectroscopic measurements. It uses optical amplification via the Brillouin Scattering effect, combined with the spectral selectivity enabled by the narrowness of the Brillouin gain curve in the optical fiber.

To achieve Brillouin amplification, both the test and probe signals are introduced into the optical fiber from opposite ends, propagating in opposite directions. This results in distinct operational principles that allow the device to provide a high level of optical amplification for the test signal while maintaining the strong spectral selectivity inherent to the Brillouin effect.

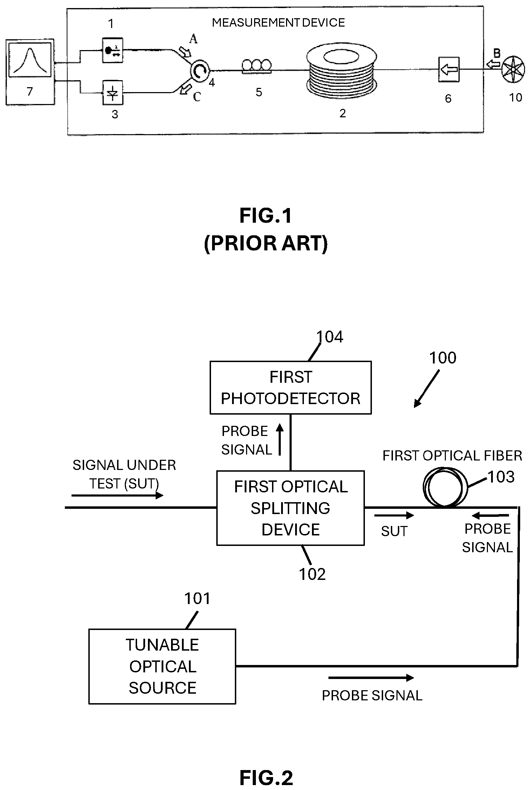

Document US2006109451A1 provides a method for more accurate and efficient optical sensing using Brillouin scattering in optical fibers. This document describes an optical sensing system that utilizes an optical fiber for measuring physical parameters, such as temperature, pressure, or strain, using a technique called Brillouin scattering. The optical sensing system (see Figure 1) comprises a control and data collection system 7 and a test signal source 10 connected to a measurement device formed by a tunable optical source 1, an optical fiber link 2, an optical circulator 4, a polarization controller 5, an optical isolator 6 and a detection system 3.

The signal under test B (SUT) and the pump A (probe signal) are injected from opposite ends of an optical fiber. The interaction between both signals causes an optical power transfer due to the phenomenon of stimulated Brillouin scattering, which produces very high gain on the SUT over a very narrow bandwidth. By scanning the spectral range of the SUT with the tunable optical source and measuring the amplified SUT C (amplification due to the power transfer caused by the stimulated Brillouin scattering) a power level is obtained that is related to the power spectral density of the SUT at that wavelength, from which, after some post-processing, the optical spectrum of the SUT is extracted with high resolution.

However, the signal detected in the photodetector, in addition to the "useful" signal resulting of the Brillouin amplification of the SUT, contains two other contributions: 1) a power level ("baseline") dependent on the power and sweep speed of the pumping at each wavelength, caused by the spontaneous Brillouin amplification present in the fiber; and 2) a power level ("direct light") corresponding to the rest of the unamplified SUT itself.

Therefore, all these solutions provide measures of the optical spectra of signals which are "masked" due to the presence of the previously mentioned baseline and direct light, causing reduced measurement sensitivity and the presence of measurement artifacts.

Therefore, there is a need in the state of the art for a solution that allows separating the "useful" part of the optical spectrum of the SUT from the baseline and direct light in an easy and reliable way and by means of an optical arrangement that is not too complex.

### DESCRIPTION

A first object of the present disclosure is a system for measuring optical spectra of signals based on optical spectroscopy. As used herein, the expression 'optical spectroscopy' may refer to those quantitative and qualitative analytical methods that measure the spectral composition of optical signals. As used herein, the term 'light' may refer to the electromagnetic radiation that covers the spectral range from the far-ultraviolet (UV), followed by visible light (VIS) up to the near infrared region (NIR).

The system for measuring optical spectra of signals comprises a tunable optical source configured to generate a probe signal (pump). These tunable optical sources are those whose wavelength of operation can be altered in a controlled manner. The system further comprises a first optical splitting device configured to receive the signal under test (SUT) whose optical spectrum is to be measured, a first optical fiber connected on a first end to the first optical splitting device and on a second end to the tunable optical source, the first optical fiber causing insertion losses in the probe signal when passing through it due to absorption and scattering effect and a first photodetector connected to the first optical splitting device. The SUT and the probe signal travel in opposite directions. As used herein, the optical splitting devices refers to optical devices capable of splitting the optical power of the input signal into two or more output signals.

The first photodetector is configured to:
measure, with the probe signal and the SUT being injected into the first optical fiber and propagating in opposite directions, the insertion losses in the probe signal after having passed through the first optical fiber, obtaining a raw optical spectrum of the SUT. This raw optical spectrum of the probe signal presents artifacts corresponding to a crosstalk with the SUT spectrum caused by stimulated Brillouin scattering;
subtract a baseline from the raw optical spectrum of the SUT obtaining a processed optical spectrum of the SUT. The baseline corresponds to the power level of the probe signal after having passed, in absence of the SUT in the first optical fiber, through the first optical fiber. This baseline is not affected by the "direct light" of the SUT since this measure has been made in absence of the SUT; and
calibrate the processed optical spectrum of the SUT to obtain the optical spectrum of the SUT. The resulting optical spectrum is the "useful" optical spectrum of the SUT that contains neither the contributions of the baseline of the probe signal nor of the direct light of the SUT.

The insertion losses in the probe signal are generally caused by absorption and scattering effects that take place inside the optical fiber. While scattering losses generally occur due to microscopic variations in the material density, compositional fluctuations, structural homogeneities, and manufacturing defects, absorption losses are generally caused by the presence of residual impurities in the fiber optic cable. The scattering losses are generated by a combination of different types of scatterings, including Raman, Rayleigh and Brillouin scatterings, where Brillouin scattering is predominant over the rest of scatterings (especially for the case of narrow signals), in particular in the presence of a counter-propagating signal that enables stimulated Brillouin scattering to occur. Other causes that may provoke insertion losses in the probe signal may be optical reflections and misalignments or positioning errors in the components forming the optical system.

In some embodiments, the system comprises a polarization controller connected to the output of the tunable optical source. Polarization controllers can, by means of stress-induced birefringence in optical fibers, change the polarization of a transmitted signal (linear, elliptical or circular).

In some embodiments, the polarization controller may be a piezoelectric polarization state generator that is configured to sequentially generate two orthogonal polarizations of the probe signal or an optical polarization scrambler configured to randomly generate different polarizations for the probe signal. Piezoelectric polarization state generators are capable of making rapid changes between polarizations, which reduces measurement time.

In some embodiments, the system comprises a first amplifier connected between the tunable optical source and the first optical fiber to amplify the probe signal. If the first amplifier is not a polarization-maintaining amplifier (e.g., an erbium doped fiber amplifier, EDFA) the first amplifier may be further arranged between the polarization controller and the first optical fiber in those embodiments in which the system incorporates such polarization controller. If the first amplifier is a polarization-maintaining amplifier (e.g., semiconductor amplifiers for some frequency bands) the first amplifier may be further arranged between the polarization controller and the tunable optical source in those embodiments in which the system incorporates such polarization controller. The type of amplifier used in each case may depend on the wavelength band in which the tunable optical source emits. For example, the first amplifier may be an EDFA when the light is being emitted by the tunable optical source in the C-band (1530-1565nm) and/or the L-band (1565-1625nm), an ytterbium doped fiber amplifier (YDFA) for the T-band (1000-1260 nm), a praseodymium doped fiber amplifier (PDFA) for the O-band O (1260-1360 nm) or semiconductor optical amplifiers (SOA) which are available in different wavelength bands.

In some embodiments, the tunable optical source is a high-coherence tunable laser source.

In some embodiments, the system comprises an optical isolator arranged at the input of the first optical splitting device. This isolator prevents the light from traveling in the opposite direction of the SUT and towards the equipment or device that is generating the SUT, which could affect its operation.

In some embodiments, the system comprises an optical switch arranged at the input of the first optical splitting device that is configured to selectively allow or prevent the signal under test from passing through it. In such embodiments, the first photodetector is further configured to measure, with the optical switch preventing the SUT from passing through it, the insertion loss in the probe signal to obtain the baseline. That is to say, since the optical switch is closed preventing the SUT from passing through the first optical fiber, only the probe signal passes through said first optical fiber reaching the first photodetector. Thus, the probe signal suffers insertion losses due to the spontaneous scattering effect and the absorption effect when passing through the first optical fiber and said insertion losses can be measured at the first photodetector. The power level of the optical spectrum received at the photodetector determines the baseline. This arrangement allows obtaining the measure of the baseline in a simple manner by only adding the optical switch to the optical system.

In some other embodiments, the system comprises a second optical splitting device connected between the tunable optical source and the first optical fiber, a third optical splitting device and a second optical fiber connected on a first end to the second optical splitting device and on a second end to the third optical splitting device. This second optical fiber also causes insertion losses in the probe signal when passing through it due to absorption and scattering effect. The system further comprises a second photodetector connected to the third optical splitting device that is configured to measure the insertion losses in the probe signal after having passed through the second optical fiber, obtaining the baseline. The probe signal only suffers insertion losses due to the spontaneous scattering effect and the absorption effect in this second optical fiber since the SUT signal does not travel through said second optical fiber. This second optical fiber will be substantially the same fiber (i.e., same type of fiber and same length although they could introduce small attenuation differences in the signals that could be previously calibrated to compensate them) than the first optical fiber so the insertion losses both optical fibers cause in the probe signal are substantially the same. This arrangement allows measuring the baseline in a continuous manner so it can be subtracted from the raw optical spectra of the SUT in a continuous manner too. Although this arrangement may be more complex, it allows the use of tunable optical sources that do not require a very high output power stability since the baseline measured by the second photodetector at a particular instant can be subtracted from the raw optical spectra of the SUT measured at the same instant in a continuous way. Therefore, instabilities in the tunable laser source do not affect the measured optical spectra of the SUT.

The subtraction of the baseline from the measured raw optical spectrum of the SUT produces a processed optical spectrum that is "inverted" (i.e. the presence of power in a wavelength of the SUT produces an absorption in the raw optical spectrum and the processed optical spectrum). Using this signal instead of the amplified SUT presents the advantage of eliminating the dependence on SUT variations, making the measure more robust.

In some embodiments, the system comprises a second amplifier connected between the second optical splitting device and the second optical fiber. The type of amplifier used may depend on the wavelength band in which the tunable optical source emits. For example, the first amplifier may be an erbium doped fiber amplifier (EDFA) when the light is being emitted by the tunable optical source in the C-band (1530-1565nm) and/or the L-band (1565-1625nm), an ytterbium doped fiber amplifier (YDFA) for the T-band (1000-1260 nm), a praseodymium doped fiber amplifier (PDFA) for the O-band O (1260-1360 nm) or semiconductor optical amplifiers (SOA) which are available in different wavelength bands.

In some embodiments, the first optical splitting device, the second optical splitting device and the third optical splitting device are selected from a group comprising a coupler, a beamsplitter, a multimodal interferometer and a circulator.

A second object of the present disclosure is a method for measuring optical spectra of signals based on optical spectroscopy. The method comprises the steps of:
providing a tunable optical source configured to generate a probe signal, a first optical splitting device configured to receive the SUT whose optical spectrum is to be measured, the SUT and the probe signal propagating in opposite directions, a first optical fiber connected on a first end to the first optical splitting device and on a second end to the tunable optical source and a first photodetector connected to the first optical splitting device. The first optical fiber is configured to cause insertion losses in the probe signal when passing through it due to absorption and scattering effect;
measuring, with the probe signal and the signal under test being injected into the first optical fiber, the insertion losses in the probe signal after having passed through the first optical fiber, obtaining a raw optical spectrum of the signal under test;
subtracting a baseline from the raw optical spectrum of the signal under test obtaining a processed optical spectrum of the signal under test, the baseline corresponding to the power level of probe signal after having passed through the first optical fiber in absence of the signal under test in the first optical fiber; and
calibrating the processed optical spectrum of the signal under test to obtain the optical spectrum of the signal under test.

In some embodiments, the method further comprises:
providing an optical switch arranged at the input of the first optical splitting device that is configured to selectively allow or prevent the signal under test from passing through it;
preventing, by the optical switch, the signal under test to pass through; and
measuring, by the first photodetector, the insertion losses in the probe signal after having passed through the first optical fiber obtaining the baseline.

In some other embodiments, the method further comprises:
providing a second optical splitting device connected between the tunable optical source and the first optical fiber, a third optical splitting device and a second optical fiber connected on a first end to the second optical splitting device and on a second end to the third optical splitting device, the second optical fiber causing insertion losses in the probe signal when passing through it due to absorption and scattering effect; and
measuring, by the second photodetector, the insertion losses in the probe signal after having passed through the second optical fiber, obtaining the baseline.

The system and method herein disclosed allow measuring optical spectra of signals based on optical spectroscopy in a simple manner and making use of uncomplex optical arrangements. It further allows separating the "useful" part of the measured optical spectra of the SUT from the "baseline" (power level dependent on the power and sweep speed of the pumping of the tunable power source at each wavelength, caused by the spontaneous Brillouin amplification present in the fiber, that reaches the photodetector) and the "direct light" (power level corresponding to the rest of the unamplified SUT itself, that reaches the photodetector) components.

### BRIEF DESCRIPTION OF THE DRAWINGS

To complete the description and in order to provide for a better understanding of the disclosure, a set of drawings is provided. Said drawings form an integral part of the description and illustrate an embodiment of the disclosure, which should not be interpreted as restricting the scope of the disclosure, but just as an example of how the disclosure can be carried out.

The drawings comprise the following figures:
Figure 1 shows a block diagram of the optical sensing system disclosed in prior art document US2006109451A.
Figure 2 shows a block diagram of a system for measuring optical spectra of signals based on optical spectroscopy, according to a particular embodiment of the present disclosure.
Figure 3 shows a block diagram of a system for measuring optical spectra of signals based on optical spectroscopy that includes an optical switch and an optical isolator, according to another embodiment of the present disclosure.
Figure 4 shows a block diagram of the system for measuring optical spectra of signals based on optical spectroscopy of Figure 3 with the position of the optical switch and the optical isolator exchanged, according to another embodiment of the present disclosure.
Figure 5 shows a block diagram of a system for measuring optical spectra of signals based on optical spectroscopy that includes a second optical fiber, according to another embodiment of the present disclosure.
Figure 6 shows a flow diagram of a method for measuring optical spectra of signals based on optical spectroscopy, according to a particular embodiment of the present disclosure.
Figure 7 shows a set of graphs including the different signals and spectra generated within the system for measuring optical spectra of signals based on optical spectroscopy, according to an embodiment of the present disclosure.

### DETAILED DESCRIPTION OF THE DRAWINGS

Figure 2 shows a block diagram of a system 100 for measuring optical spectra of signals based on optical spectroscopy, according to a particular embodiment of the present disclosure. It should be understood that the system 100 depicted in Figure 2 may include additional components and that some of the components described herein may be removed and/or modified without departing from the scope of the system 100.

The system 100 comprises a tunable optical source 101 configured to generate the probe signal and a first optical splitting device 102 configured to receive the signal under test (SUT) whose optical spectrum is to be measured. The SUT and the probe signal travel in opposite directions. The SUT may be generated by an external source (not shown in this figure). The system 100 further comprises a first optical fiber 103 connected on one of its ends to the first optical splitting device 102 and on the other end to the tunable optical source 101 and a first photodetector 104 connected to the first optical splitting device 102. The first optical fiber 103 causes insertion losses in the probe signal when passing through it due to absorption and scattering effect, in particular due to Brillouin scattering effect. The tunable optical source 101 may be a tunable optical laser source and the first optical splitting device 102 may be an optical coupler, beamsplitter, multimodal interferometer, circulator or any other optical component able to separate the optical power of the input signal, in particular of the probe signal after having passed through the first optical fiber 103, in two or more optical signals, one signal that is directed to the first optical photodetector 104 and the other that is directed towards the SUT input.

The first photodetector 104 is configured to measure, with the probe signal and the SUT being injected into to the first optical fiber 103, the insertion losses in the probe signal after having passed through the first optical fiber 103, obtaining a raw optical spectrum of the SUT. The first photodetector 104 is further configured to subtract the baseline from the raw optical spectrum of the SUT obtaining a processed optical spectrum of the SUT the baseline corresponding to the power level of the probe signal after having passed, in absence of the SUT, through the first optical fiber 103 and to calibrate the processed optical spectrum of the SUT to obtain the optical spectrum of the SUT.

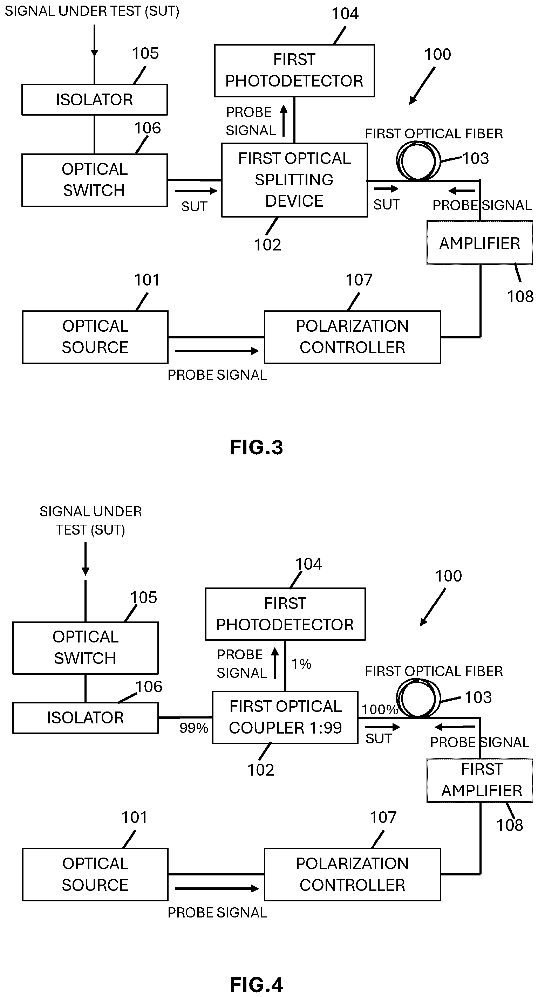

Figure 3 shows a block diagram of the system 100 for measuring optical spectra of signals based on optical spectroscopy that includes an optical switch and an optical isolator, according to another embodiment of the present disclosure. This system 100 is similar to the system of Figure 2 but includes an isolator 105 that prevents light, in particular the direct light from the probe signal and the light reflected from the first optical fiber, from traveling in the opposite direction of the SUT and towards the equipment or device that is generating the SUT, which could affect its operation. The system also comprises an optical switch 106 arranged at the input of the first optical splitting device 102 and that is configured to selectively allow or prevent the signal under test from passing through it. The optical isolator 105 is arranged at the input of the optical switch 106. In this example, the first photodetector 103 is configured to measure, with the optical switch 106 preventing the SUT from passing through it, the insertion loss in the probe signal to obtain the baseline.

The system further comprises a polarization controller 107, such as an optical polarization scrambler configured to randomly generate different polarizations, to manage the polarization of the probe signal and a first amplifier 108 arranged between the polarization controller 107 and the first optical fiber 103 to amplify the probe signal.

Figure 4 shows a block diagram of the system 100 for measuring optical spectra of signals based on optical spectroscopy of Figure 3 with the position of the optical switch 105 and the optical isolator 106 exchanged, according to another embodiment of the present disclosure. In this embodiment, the first optical splitting unit is an optical coupler 1:99 102 that deviates 1% of the power of the probe signal coming from the first optical fiber 103 so its optical spectra can be measured at the first photodetector 104. The rest of the optical power of the probe signal is sent to the optical isolator 106. The percentages in this drawing refer to the optical power of the probe signal passing through each branch of the system 100. Instead of an optical coupler 1:99, another coupler configured to make a different division of the power for the two output signals could be used. Alternatively, instead of a coupler, a beamsplitter, a multimodal interferometer or a circulator could be used.

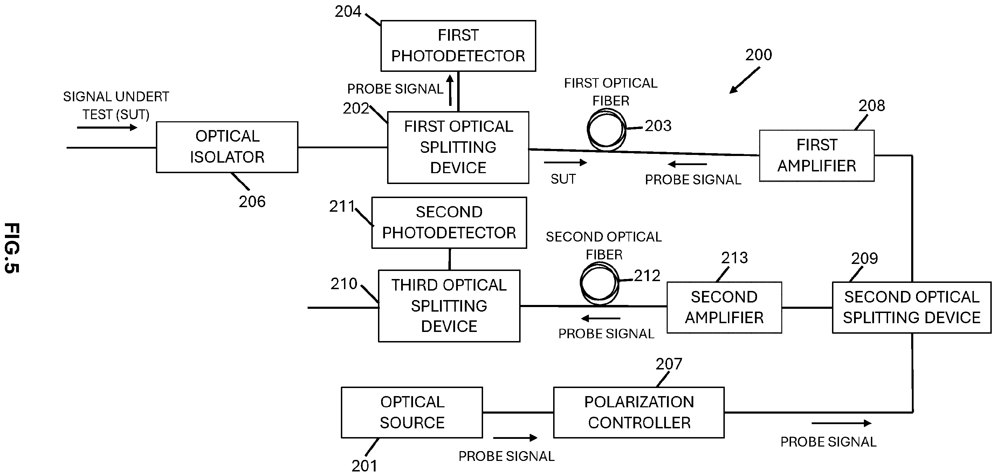

Figure 5 shows a block diagram of a system 200 for measuring optical spectra of signals based on optical spectroscopy that includes a second optical fiber 212, according to another embodiment of the present disclosure. It should be understood that the system 200 depicted in Figure 5 may include additional components and that some of the components described herein may be removed and/or modified without departing from the scope of the system 200.

In this embodiment, the same components shown in the systems 100 of figures 1 and 2 are also present, except for the optical switch 105. The same numbering has been used in figure 5 than in figures 1 and 2 but in the range of the two hundred.

In the system 200 of Figure 5 instead of using an optical switch for obtaining the baseline, a combination of a second optical splitting device 209 connected between the polarization controller 207 and the first amplifier 208, a third optical splitting device 210, a second optical fiber 212 connected on a first end to the second optical splitting device 209 and on a second end to the third optical splitting device 210 and a second photodetector 211 connected to the third optical splitting device 210. The first optical fiber 203 and the second optical fiber 212 are substantially the same optical fiber (same length, type and properties). The second optical fiber 212 is configured to cause insertion losses in the probe signal when passing through it due to absorption and scattering effect. Since both optical fibers 203,212 are substantially the same, they are configured to cause substantially the same insertion losses in the probe signal due to absorption and spontaneous scattering effect. The SUT signal does not pass through the second optical fiber 212. In such an embodiment, the second photodetector 211 is configured to measure the insertion losses in the probe signal after having passed through the second optical fiber 212, obtaining the baseline. This baseline is then subtracted from the raw optical spectrum of the SUT measured in the first optical fiber 204. The probe signal that is directed towards the second optical fiber 212 is amplified by a second amplifier 213.

The second optical splitting device may be an optical coupler 50:50 that deviates 50% of the power of the probe signal towards the second optical fiber 212 and the other 50% towards the first amplifier 208. It may be also an optical coupler that deviates a different amount of power of the probe signal in any of the two output signals it generates. Alternatively, this second optical splitting device may be a beamsplitter, a multimodal interferometer or a circulator.

The third optical splitting device may be an optical coupler 1:99 that deviates a 1% of the power of the probe signal, after it has passed through the second optical fiber 212, towards the second photodetector 204 where the baseline is obtained and the other 99% is allowed to pass. It may be also an optical coupler that deviates a different amount of power of the probe signal in any of the two output signals it generates. Alternatively, this third optical splitting device may be a beamsplitter, a multimodal interferometer or a circulator.

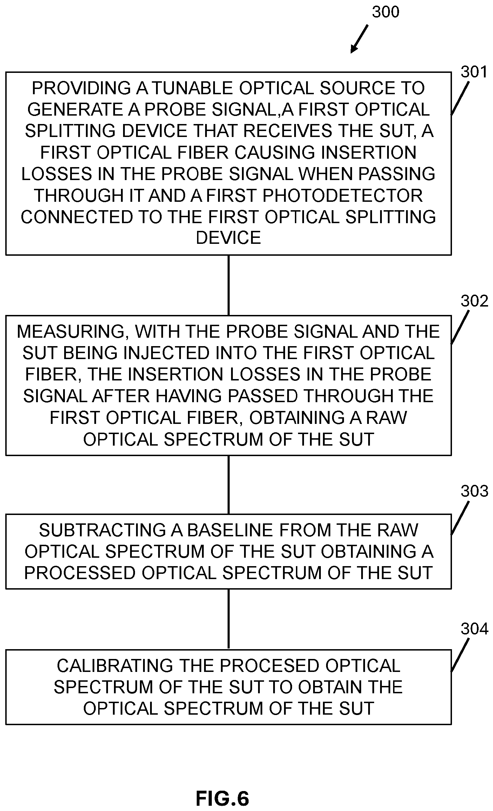

Figure 6 shows a flow diagram of a method 300 for measuring optical spectra of signals based on optical spectroscopy, according to a particular embodiment of the present disclosure.

At step 301 of the method 300, a tunable optical source configured to generate a probe signal, a first optical splitting device configured to receive the SUT whose optical spectrum is to be measured and that propagates in a direction that is opposite to that of the probe signal, a first optical fiber connected on a first end to the first optical splitting device and on a second end to the tunable optical source and a first photodetector connected to the first optical splitting device, are provided. The first optical fiber is configured to cause insertion losses in the probe signal when passing through it due to absorption and scattering effect.

At step 302 of the method 300, having the probe signal and the SUT being injected into the first optical fiber, the insertion losses in the probe signal after having passed through the first optical fiber are measured, obtaining a raw optical spectrum of the SUT. This raw optical spectrum of the probe signal presents artifacts corresponding to a crosstalk with the SUT spectrum.

At step 303 of the method 300, the baseline is subtracted from the raw optical spectrum of the SUT obtaining a processed optical spectrum of the SUT. The baseline corresponds to the power level of probe signal after having passed through the first optical fiber in absence of the SUT in the first optical fiber.

At step 304 of the method 300, the processed optical spectrum of the SUT is calibrated to obtain the optical spectrum of the SUT.

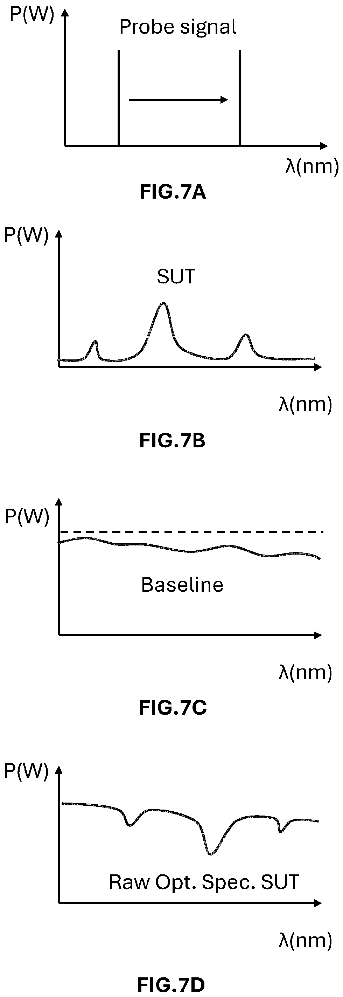

Figure 7 shows different graphs including signals and spectra generated within the system for measuring optical spectra of signals based on optical spectroscopy, according to an embodiment of the present disclosure.

Figure 7A shows the output optical power of the tunable optical source. This probe signal is a narrowband optical signal that is frequency-sweep by the tunable optical source in the wavelength range of interest. Figure 7B shows the SUT that is being injected into the system and that is generated by an external optical source. Figure 7C shows the baseline which corresponds to the power level of probe signal after having passed through the first and second optical fibers in absence of the SUT. The discontinuous line represents the power level of the original probe signal and the difference with the power level of the baseline represents the insertion losses that suffer the probe signal when passing through the optical fibers due to the spontaneous Brillouin effect. Figure 7D shows the raw optical spectrum of the SUT corresponding to the insertion losses in the probe signal after having passed through the first optical fiber. The insertion losses are caused by the interaction of the SUT and the probe signals (stimulated Brillouin scattering) in the first optical fiber. Then, the baseline of Figure 7C is subtracted from the raw optical spectrum of the SUT of Figure 7D and the resulting processed optical spectrum of the SUT is calibrated to obtain the optical spectrum of the SUT of Figure 7B.

## Claims

1. A system (100) for measuring optical spectra of signals based on optical spectroscopy, **characterized in that** the system comprises:
a tunable optical source (101) configured to generate a probe signal;
a first optical splitting device (102) configured to receive a signal under test whose optical spectrum is to be measured, the signal under test and the probe signal propagating in opposite directions;
a first optical fiber (103) connected on a first end to the first optical splitting device (102) and on a second end to the tunable optical source (101), the first optical fiber (103) causing insertion losses in the probe signal when passing through it due to absorption and scattering effect; and
a first photodetector (104) connected to the first optical splitting device (102) and being configured to:
measure, with the probe signal and the signal under test being injected into to the first optical fiber (103), the insertion losses in the probe signal after having passed through the first optical fiber (103), obtaining a raw optical spectrum of the signal under test;
subtract a baseline from the raw optical spectrum of the signal under test obtaining a processed optical spectrum of the signal under test, the baseline corresponding to the power level of the probe signal after having passed, in absence of the signal under test, through the first optical fiber (103);
calibrate the processed optical spectrum of the signal under test to obtain the optical spectrum of the signal under test.

2. The system (100) according to claim 1, comprising a polarization controller (107) connected to the output of the optical source.

3. The system (100) according to claim 2, wherein, the polarization controller (107) is a piezoelectric polarization state generator that is configured to sequentially generate two orthogonal polarizations of the probe signal or an optical polarization scrambler configured to randomly generate different polarizations for the probe signal.

4. The system (100) according to claims 2 or 3, comprising a first amplifier (108) connected between the polarization controller (107) and the first optical fiber (103) to amplify the probe signal.

5. The system (100) according to any one of the preceding claims, wherein the tunable optical source (101) is a high-coherence tunable laser source.

6. The system (100) according to any one of the preceding claims, comprising an optical isolator (106) arranged at the input of the first optical splitting device (102).

7. The system (100) according to any one of the preceding claims 1 to 6, comprising an optical switch (105) arranged at the input of the first optical splitting device (102) that is configured to selectively allow or prevent the signal under test from passing through it, and wherein the first photodetector (104) is further configured to measure, with the optical switch (105) preventing the signal under test from passing through it, the insertion losses in the probe signal to obtain the baseline.

8. The system (200) according to any one of claims 1 to 6, comprising:
a second optical splitting device (209) connected between the tunable optical source (201) and the first optical fiber (203);
a third optical splitting device (210);
a second optical fiber (212) connected on a first end to the second optical splitting device (209) and on a second end to the third optical splitting device (210), the second optical fiber (212) causing insertion losses in the probe signal when passing through it due to absorption and scattering effect; and
a second photodetector (211) connected to the third optical splitting device (210);
wherein the first optical fiber (203) and the second optical fiber (212) are substantially the same; and
wherein the second photodetector (211) is configured to measure the insertion losses in the probe signal after having passed through the second optical fiber, obtaining the baseline.

9. The system (200) according to claim 8, comprising a second amplifier (213) connected between the second optical splitting device (209) and the second optical fiber (212).

10. The system (200) according to any one of the preceding claims, wherein the first optical splitting device (103, 203), the second optical splitting device (209) and the third optical splitting device (210) are selected from a group comprising a coupler, a beamsplitter, a multimodal interferometer and a circulator.

11. A method (300) for measuring optical spectra of signals based on optical spectroscopy, the method comprising the steps of:
providing (301) a tunable optical source configured to generate a probe signal, a first optical splitting device configured to receive a signal under test whose optical spectrum is to be measured that propagates in a direction that is opposite to that of the probe signal, a first optical fiber connected on a first end to the first optical splitting device and on a second end to the tunable optical source, the first optical fiber causing insertion losses in the probe signal when passing through it due to absorption and scattering effect, and a first photodetector connected to the first optical splitting device, **characterized in that** the method further comprises the steps of:
measuring (302), with the probe signal and the signal under test being injected into the first optical fiber, the insertion losses in the probe signal after having passed through the first optical fiber, obtaining a raw optical spectrum of the signal under test;
subtracting (303) a baseline from the raw optical spectrum of the signal under test obtaining a processed optical spectrum of the signal under test, the baseline corresponding to the power level of probe signal after having passed through the first optical fiber in absence of the signal under test in the first optical fiber; and
calibrating (304) the processed optical spectrum of the signal under test to obtain the optical spectrum of the signal under test.

12. The method according to claim 11, comprising:
providing an optical switch arranged at the input of the first optical coupler that is configured to selectively allow or prevent the signal under test to pass through it;
preventing, by the optical switch, the signal under test to pass through; and
measuring, by the first photodetector, the insertion losses in the probe signal after having passed through the first optical fiber obtaining the baseline.

13. The method according to claim 11, comprising:
providing a second optical splitting device connected between the tunable optical source and the first optical fiber, a third optical splitting device and a second optical fiber connected on a first end to the second optical splitting device and on a second end to the third optical splitting device, the second optical fiber causing insertion losses in the probe signal when passing through it due to absorption and scattering effect, the first and second optical fibers being substantially the same; and
measuring, by the second photodetector, the insertion losses in the probe signal after having passed through the second optical fiber, obtaining the baseline.
